# EUROPÄISCHE PATENTANMELDUNG

(11) **EP 0 827 977 A1**
(43) Veröffentlichungstag der Anmeldung: **11.03.1998**
(21) Anmeldenummer: 97115506.4
(22) Anmeldetag: 08.09.1997
(51) Int. Cl.: C08G 75/20, C08G 75/02

(54) **Verfahren zur Oxidation von Thioethergruppen enthaltenden Polyarylenverbindungen**

(30) Priorität: 10.09.1996 DE 19636692
(71) Anmelder: HOECHST AKTIENGESELLSCHAFT, 65929 Frankfurt am Main (DE)
(72) Erfinder: Scheckenbach, Helmut, 63225 Langen (DE); Delpy, Klaus, Dr., 63128 Dietzenbach (DE); Disch, Stefan, Dr., 60599 Frankfurt (DE)

(57) **Zusammenfassung**

Das Verfahren zur Herstellung von Polyarylensulfonen durch Oxidation von Polyarylensulfiden mit einem Oxidationsmittel in Gegenwart einer Flüssigkeit wird bei vermindertem Druck durchgeführt, so daß die Flüssigkeit siedet. Die Reaktionstemperatur kann in dem Verfahren leicht konstant gehalten werden.

## Beschreibung

Die Erfindung betrifft ein Verfahren zur Herstellung von Polyarylensulfonen durch Oxidation von Polyarylensulfiden, die auch Polyarylenthioether genannt werden.

Ein Verfahren zur Herstellung von Polyarylensulfonen durch Oxidation von Polyarylensulfiden mit Wasserstoffperoxid in konzentrierter Schwefelsäure wird in DE-A1-19 38 806 und Chimia 28, 567 (1974) beschrieben. Der Nachteil des Verfahrens ist, daß bei der Reaktion starke Temperaturschwankungen auftreten.

Der Einsatz eines Wasserstoffperoxid/Essigsäure-Gemisches zur Oxidation von sulfongruppenhaltigen aromatischen Polythioethern wird beschrieben in Chimia 28, 567 (1974). Dieses Verfahren setzt allerdings den Einsatz von großen Mengen Suspensionsmittel und hohe Temperaturen voraus.

Ein Verfahren zur Herstellung von Polyarylensulfonen durch Oxidation von Polyarylensulfiden in Essigsäure mit Wasserstoffperoxid unter Zusatz katalytischer Mengen Schwefelsäure oder organischer Gleichgewichtspersäure wird beschrieben in DE-A1-4314738. Dieses Verfahren hat den Nachteil, daß die Reaktionstemperatur während der Wasserstoffperoxid-Dosierung starken Schwankungen unterliegt.

Es bestand daher die Aufgabe, die Nachteile der bekannten Verfahren zu vermeiden und ein Verfahren zu entwickeln, bei dem die Reaktionstemperatur während der Wasserstoffperoxid- oder Persäure-Dosierung weitgehend konstant bleibt.

Es wurde gefunden, daß die Temperatur im Reaktionsgemisch bei der Herstellung von Polyarylensulfonen durch Oxidation von Polyarylensulfiden mit Wasserstoffperoxid oder Persäuren leicht konstant gehalten werden kann, wenn ein verminderter Druck herrscht, so daß das flüssige Reaktionsmedium, beispielsweise das Lösemittel, siedet.

Die Erfindung betrifft somit ein Verfahren zur Herstellung von Polyarylensulfonen durch Oxidation von Polyarylensulfiden mit einem Oxidationsmittel in Gegenwart einer Flüssigkeit, wobei ein verminderter Druck angewendet wird, so daß die Flüssigkeit siedet.

Polyarylensulfide, insbesondere Polyphenylensulfid, lassen sich auf Grundlage der Reaktion von dihalogenierten Aromaten mit Natriumsulfid nach EDMONDS und HILL herstellen. Polyarylensulfide und deren Herstellung sind in "Ullmann's Encyclopedia of Industrial Chemistry, Volume A21, B. Elvers, S. Hawkins und G. Schulz (Eds.), VCH, Weinheim-New York 1992, S. 463-472 beschrieben, worauf Bezug genommen wird.

Polyarylensulfone sind Polymere, die Arylensulfon-Einheiten enthalten. Die Polyarylensulfone können vollständig oder teilweise oxidierte Polyarylensulfide darstellen. Verfahren zur Herstellung von Polyarylensulfonen werden in DE-A1-4314737 und DE-A1-4314738 beschrieben, worauf Bezug genommen wird.

Oxidationsmittel sind Wasserstoffperoxid, Wasserstoffperoxid in einer anorganischen oder organischen Säure oder anorganische oder organische Persäuren. Eine anorganische Säure ist beispielsweise Schwefelsäure. Organische Säuren sind beispielsweise aromatische oder aliphatische Carbonsäuren, wie Benzoesäure oder Essigsäure. Ist die Säure eine Flüssigkeit, so kann sie als Reaktionsmedium eingesetzt werden. Die Säuren können Wasser enthalten oder in Wasser gelöst sein. Eine anorganische Persäure ist beispielsweise Carosche Säure. Eine organische Persäure ist beispielsweise Peressigsäure. Vorteilhaft wird organischen Säuren Schwefelsäure zugesetzt. Eine Ausnahme ist die Reaktion in Ameisensäure. Sie bedarf keiner weiteren Aktivierung durch mineralische Säuren. Bevorzugte Oxidationsmittel sind Wasserstoffperoxid in konzentrierter Schwefelsäure oder Wasserstoffperoxid in konzentrierter Essigsäure, die auch vorteilhaft 0,1 bis 10 Volumenprozent, insbesondere 1 bis 5 Volumenprozent, Schwefelsäure enthalten kann. Wasserverdünnte Säuren werden auch verwendet.

Gemische von Wasserstoffperoxid und einer Säure bilden im allgemeinen eine Persäure, die im Gleichgewicht mit den Edukten steht und daher als Gleichgewichtspersäure bezeichnet wird.

Wasserstoffperoxid wird im allgemeinen in Form einer 20 bis 70-%igen wäßrigen Lösung eingesetzt. Jedoch können auch höherprozentige Lösungen oder reines Wasserstoffperoxid verwendet werden.

Bei Verwendung von Schwefelsäure als Reaktionsmedium wird die Oxidation bei Temperaturen von -30 °C bis 140 °C, vorzugsweise von 0 °C bis 90 °C und bei Drucken von 1*10⁻⁵ mbar bis 10 mbar, vorzugsweise von 1*10⁻³ mbar bis 1 mbar durchgeführt. Die Oxidation in organischen Säuren findet im allgemeinen bei Temperaturen von 20 °C bis 120 °C, bevorzugt von 40 °C bis 90 °C, und bei Drucken von 1 mbar bis 1000 mbar, vorzugsweise von 5 mbar bis 500 mbar, statt.

Die Reaktionszeit liegt im allgemeinen im Bereich von 0,5 bis 12 Stunden, bevorzugt 1 bis 4 Stunden.

### Beispiele

### Beispiel 1

54,08 g Poly-1,4-phenylensulfid-Pulver mit einem mittleren Teilchendurchmesser von 2*10⁻⁵ m (Glastemperatur T_{g}= 94 °C, Schmelzpunkt Tₘ= 287 °C) wurden in einer Mischung aus 196,7 g konzentrierter Essigsäure und 1 ml konzentrierter Schwefelsäure vorgelegt. Bei der Temperatur von 63 °C wurde ein konstanter Druck von 140 mbar angelegt, so daß ein schwaches Sieden der Reaktionsmischung zu beobachten war. Unter diesen Bedingungen wurden 81,74 g 50-%iges Wasserstoffperoxid innerhalb von 1 h zugetropft, wobei der Siedepunkt der Reaktionsmischung am Ende der Zugabe bei 140 mbar 60 °C betrug. Nach der Zugabe wurde 2 h bei 140 mbar und 60 °C nachgerührt. Das Produkt wurde abfiltriert, mit Wasser gewaschen und bei 100 °C im Vakuum getrocknet.
Ausbeute: 63,85 g
Charakterisierung des Produktes durch Differential Scan Calorimetry (DSC) ergibt:
   T_{g}= 350 °C, Tₘ= 520 °C.

| Elementaranalyse des Produktes: berechnet für ein Polyphenylensulfon mit 100 % Sulfongruppen: | | | | |
|---|---|---|---|---|
| | C 51,4 %, | H 2,9 %, | S 22,9 %, | O 22,8 % |
| gefunden: | C 55,8 %, | H 2,9 %, | S 24,6 %, | O 15,4 %, |

Wird Poly-1,4-phenylensulfid ein Oxidationsgrad von 0 % zugeordnet und einem vollständig oxidierten Poly-1,4-phenylensulfon, in dem der Schwefel ausschließlich als Sulfon-Gruppe vorliegt, ein Oxidationsgrad von 100 %, so ergibt die Elementaranalyse einen Oxidationsgrad von 62,1 % für das als Produkt gebildete Poly-1,4-phenylensulfon.
Untersuchung des Poly-1,4-phenylensulfons mit ESCA (Electron Spectroscopy for Chemical Analysis) ergibt, daß Sulfid, Sulfoxid und Sulfongruppen im Polymeren enthalten sind.

### Beispiel 2

25,94 g Poly-1,4-phenylensulfid-Pulver mit einem mittleren Teilchendurchmesser von 2 *10⁻⁵ m (T_{g}= 94 °C, Tₘ= 287 °C) wurden in 400 ml konzentrierter Schwefelsäure suspendiert. Bei der Temperatur von 60 °C wurde ein konstanter Druck von 0,05 mbar angelegt, so daß ein schwaches Sieden der Reaktionsmischung zu beobachten war. Unter diesen Bedingungen wurde ein equilibriertes Gemisch aus 21 ml Wasserstoffperoxid (100%-ig) und 300 ml Schwefelsäure (Carosche Säure) innerhalb von 30 Minuten zugetropft, wobei der Siedepunkt der Reaktionsmischung am Ende der Zugabe bei 0,05 mbar 55 °C betrug. Zu Beginn der Peroxid-Zugabe färbte sich das Reaktionsgemisch grünlich, wurde bei weiterer Zugabe dunkler, bis gegen Ende der Peroxid-Zugabe eine klare, braune Lösung gebildet wurde. Nach beendeter Peroxid-Zugabe fiel das Produkt als farbloser Niederschlag aus. Danach wurde 30 Minuten bei 0,05 mbar und 55 °C nachgerührt. Das Produkt wurde in 5 l Eiswasser gegeben, abfiltriert, mit Wasser neutral gewaschen und bei 100 °C im Vakuum getrocknet.
Ausbeute: 29,5 g
DSC-Charakterisierung des Produktes: T_{g}= 350 °C, Tₘ= 520 °C

| Elementaranalyse des Produktes: berechnet für ein Polyphenylensulfon mit 100 % Sulfongruppen: | | | | |
|---|---|---|---|---|
| | C 51,4 %, | H 2,9 %, | S 22,9 %, | O 22,8 % |
| gefunden: | C 51.5 %, | H 3.0 %, | S 22.7 %, | O 22.6 %. |

Das Elementaranalysenergebnis entspricht einem Oxidationsgrad von 99% des Produktes.

### Beispiel 3

50 g Poly-1,4-phenylensulfid-Pulver mit einem mittleren Teilchendurchmesser von 2*10⁻⁵ m (Glastemperatur T_{g}= 94 °C, Schmelzpunkt Tₘ= 287 °C) wurden aus 200 g konzentrierter Ameisensäure vorgelegt. Bei der Temperatur von 56 °C wurde ein konstanter Druck von 190 mbar angelegt, so daß ein schwaches Sieden der Reaktionsmischung zu beobachten war. Unter diesen Bedingungen wurden 80 g 50 %iges Wasserstoffperoxid innerhalb von 1 h zugetropft, wobei sich der Siedepunkt der Reaktionsmischung im Verlauf der Reaktion nicht änderte. Nach der Zugabe wurde 2 h bei 190 mbar und 56 °C nachgerührt. Das Produkt wurde abfiltriert, mit Wasser gewaschen und bei 100 °C im Vakuum getrocknet.
Ausbeute: 61 g
DSC-Charakterisierung des Produktes: T_{g}= 350 °C, Tₘ= 520 °C

| Elementaranalyse des Produktes: berechnet für ein Polyphenylensulfon mit 100 % Sulfongruppen: | | | | |
|---|---|---|---|---|
| | C 51,4 %, | H 2,9 %, | S 22,9 %, | O 22,8 % |
| gefunden: | C 53,9 %, | H 3,0 %, | S 24,0 %, | O 19,1 %. |

Das Elementaranalysenergebnis entspricht einem Oxidationsgrad von 81 % des Produktes.

## Patentansprüche

1. Verfahren zur Herstellung von Polyarylensulfonen durch Oxidation von Polyarylensulfiden mit einem Oxidationsmittel in Gegenwart einer Flüssigkeit, wobei ein verminderter Druck angewendet wird, so daß die Flüssigkeit siedet.

2. Verfahren nach Anspruch 1, dadurch gekennzeichnet, daß als Oxidationsmittel Wasserstoffperoxid, eine anorganische oder organische Persäure oder Wasserstoffperoxid in Gegenwart einer anorganischen oder organischen Säure verwendet werden.

3. Verfahren nach Anspruch 1, dadurch gekennzeichnet, daß als Oxidationsmittel Wasserstoffperoxid in Gegenwart von Essigsäure, Ameisensäure oder Schwefelsäure eingesetzt wird.

4. Verfahren nach Anspruch 1, dadurch gekennzeichnet, daß die Flüssigkeit Wasser enthält.

5. Verfahren nach Anspruch 1, dadurch gekennzeichnet, daß die Flüssigkeit 0,1 bis 10 Volumenprozent Schwefelsäure oder eine andere anorganische Säure enthält.

6. Verfahren nach einem oder mehreren der Ansprüche 1 bis 5, dadurch gekennzeichnet, daß die Oxidation bei einer Reaktionstemperatur von 20 bis 120 °C durchgeführt wird.

7. Verfahren nach einem oder mehreren der Ansprüche 1 bis 6, dadurch gekennzeichnet, daß die Oxidation bei einem Druck zwischen 1 und 1000 mbar durchgeführt wird.

8. Verfahren nach Anspruch 1, dadurch gekennzeichnet, daß die Oxidation in konzentrierter Schwefelsäure bei einer Temperatur im Bereich von -30 °C bis 140 °C durchgeführt wird.

9. Verfahren nach Anspruch 1, dadurch gekennzeichnet, daß die Oxidation in Schwefelsäure bei einem Druck im Bereich zwischen 1*10⁻⁵ mbar und 10 mbar durchgeführt wird.
